# EUROPEAN PATENT APPLICATION

(11) **EP 2 675 217 A1**
(43) Date of publication of application: **18.12.2013**
(21) Application number: 12744529.4
(22) Date of filing: 08.02.2012
(51) Int. Cl.: H04W 36/18, H04W 8/02

(54) **MOBILE COMMUNICATION SYSTEM, MOBILE COMMUNICATION METHOD, PACKET DATA NETWORK GATEWAY, AND IN-AREA GATEWAY**

(30) Priority: 08.02.2011 JP 2011025500
(71) Applicant: NTT DOCOMO, INC., Chiyoda-ku Tokyo 100-6150 (JP)
(72) Inventor: NARAHA, Shin, Tokyo 100-6150 (JP); KUNITOMO, Koichiro, Tokyo 100-6150 (JP); NISHIDA, Katsutoshi, Tokyo 100-6150 (JP)
(74) Representative: HOFFMANN EITLE
(86) International application number: PCT/JP2012/052879
(87) International publication number: WO 2012/108474

(57) **Abstract**

To avoid a phenomenon that a UE cannot transmit uplink packets even when a TAU/RAU process, handover process, or radio switching process of the UE frequently occurs and an S-GW to which the UE is to be connected is frequently changed in an EPC network to which PMIPv6 is applied. A mobile communication system including an EPC network to which PMIPv6 is applied is configured such that a S-GW#2 determines whether or not to transmit the RA to the UE based on RA transmission information transmitted by a P-GW, when the S-GW to which the UE is to be connected is changed from an S-GW#1 to the S-GW#2 by the TAU/RAU process, handover process, or radio switching process.

## Description

### TECHNICAL FIELD

The present invention relates to a mobile communication system, a mobile communication method, a packet data network gateway, and a serving gateway.

### BACKGROUND ART

In a mobile communication system including an EPC (Evolved Packet Core) network to which PMIP (Proxy Mobile IP) v6 is applied, which is described in Non-patent document 1, an S-GW (Serving Gateway) to which a UE (User Equipment, a mobile station) is to be connected is configured to transmit a "RA (Router Advertisement, a router notification signal)" to the UE.

The "RA" is configured to notify "IPv6 Prefix" which is allocated to the UE, "Router lifetime (a UE-side timer)" showing a time in which "IPv6 Prefix" is valid, or "default gateway information" which is information on a default gateway of the UE.

Here, the "Router lifetime" is a timer which is held by the UE, and a time which is three times longer than "MaxRtrAdvInterval (a network-side timer)" is defined as a default value (see, for example, Non-patent document 2).

Also, the "MaxRtrAdvInterval" is a timer (a Maximum RA transmission interval) which is held by the S-GW, and "21600 seconds (6 hours)" is defined as a default value (see, for example, Non-patent document 3).

The UE is configured to update validity of a holding IPv6 address based on periodically-received "RA" and update "default gateway information (packet transfer information)" of the UE.

The UE is configured to discard the internally held "default gateway information" when the UE determines that the IPv6 address is invalid, in other words, if the UE does not receive the "RA" by the time the "Router lifetime" expires.

In other words, the UE is configured to hold the "default gateway information" until the "Router lifetime (e.g., 18 hours)" of which the UE is notified by the "RA" expires, and delete the "default gateway information" after the "Router lifetime" has expired.

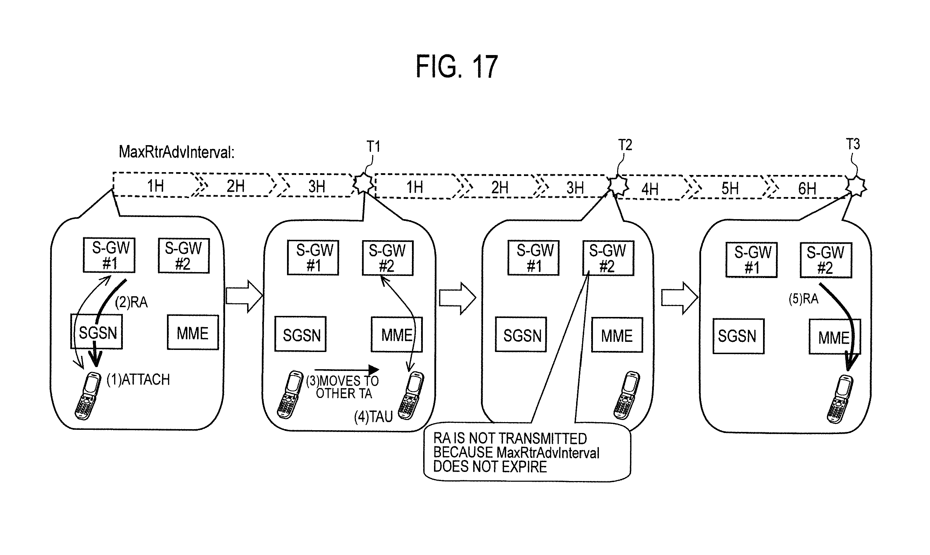

Hereinafter, referring to Fig. 17, an operation of such mobile communication system is briefly described.

As shown in Fig. 17, when an Attach procedure of a UE is performed in (1), an S-GW#1 transmits a "RA" to the UE in (2).

After that, the UE moves to a TA (Tracking Area) under the control of an S-GW#2 in (3), and a TAU (Tracking Area Update) process of the UE is performed in (4). Then, the S-GW to which the UE is to be connected is changed from the S-GW#1 to the S-GW#2.

Here, at timing T1, the "MaxRtrAdvInterval" held in the S-GW#2 is activated, and, at timing T2, the "MaxRtrAdvInterval" held in the S-GW#2 has not expired. Thus, the S-GW#2 does not transmit a "RA" to the UE.

After that, at timing T3, the S-GW#2 transmits the "RA" to the UE in (5) when the "MaxRtrAdvInterval" held in the S-GW#2 has expired.

### PRIOR ART DOCUMENT

### NON-PATENT DOCUMENT

Non-patent Document 1: 3GPP TS23.402
Non-patent Document 2: RFC4861 6.2.1
Non-patent Document 3: 3GPP TS29.061

### SUMMARY OF THE INVENTION

However, the above-described technology has problems that when a TAU/RAU (Routing Area Update) process, handover process, or radio switching process of a UE frequently occurs and an S-GW to which the UE is to be connected is frequently changed, the S-GW to which the UE is to be connected cannot transmit a "RA" to the UE and the "Router lifetime" held in the UE expires, the "default gateway information" of the UE is deleted, and thus the UE cannot transmit uplink packets.

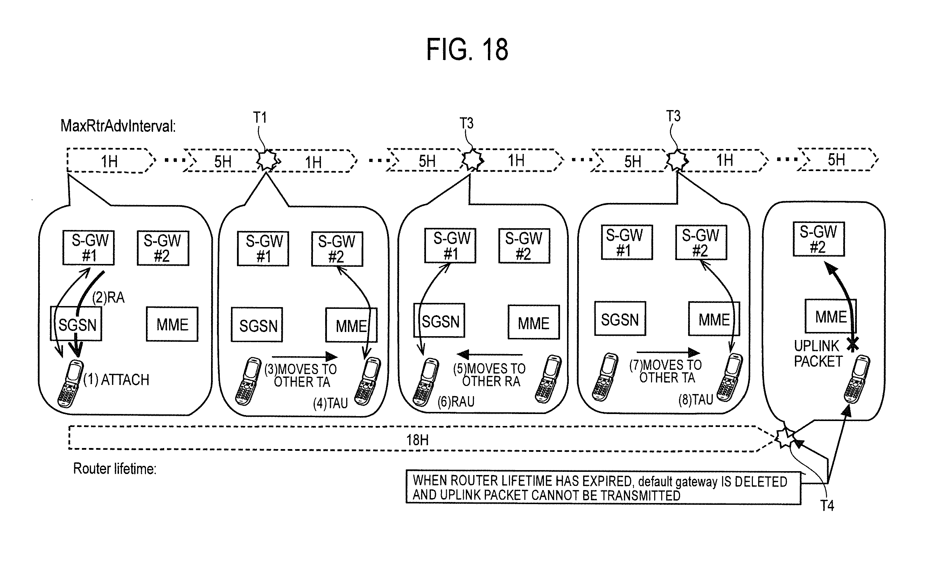

Referring to Fig. 18, such problems are briefly described.

As shown in Fig. 18, when an Attach procedure of UE is performed in (1), an S-GW#1 transmits a "RA" to the UE in (2).

After that, the UE moves to a TA under the control of the S-GW#2 in (3). Then a TAU process of the UE is performed in (4), so that the S-GW to which the UE is to be connected is changed from the S-GW#1 to the S-GW#2.

Here, at timing T1, the "MaxRtrAdvInterval" held in the S-GW#2 is activated. Accordingly, at timing T1, the S-GW#2 does not transmit a "RA" to the UE.

After that, the UE moves to a RA (Routing Area) under the control of the S-GW#1 in (5). Then, a RAU process of the UE is performed in (6), so that the S-GW to which the UE is to be connected is changed from the S-GW#2 to the S-GW#1.

Here, at timing T2, the "MaxRtrAdvInterval" held in the S-GW#1 is activated. Accordingly, at timing T2, the S-GW#1 does not transmit a "RA" to the UE.

After that, the UE moves to the TA under the control of the S-GW#2 in (7). Then, the TAU process of the UE is performed in (8), so that the S-GW to which the UE is to be connected is changed from the S-GW#1 to the S-GW#2.

Here, at timing T3, the "MaxRtrAdvInterval" held in the S-GW#2 is activated. Accordingly, at timing T3, the S-GW#2 does not transmit a "RA" to the UE.

As a result, at timing T4, the held "Router lifetime" expires while the UE does not receive the "RA" from the S-GW to which the UE is to be connected, and the UE deletes the held "default gateway information". Consequently, the UE cannot transmit uplink packets.

The present invention has been made in view of the foregoing problems. An objective of the present invention is to provide a mobile communication system, a mobile communication method, a packet data network gateway, and a serving gateway which are capable of avoiding a phenomenon that a UE cannot transmit uplink packets even when a TAU/RAU process, handover process, or radio switching process of the UE frequently occurs and an S-GW to which the UE is to be connected is frequently changed in an EPC network to which PMIPv6 is applied.

A first feature of the present invention is summarized as a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires, the mobile communication system being configured such that a second serving gateway determines whether or not to transmit the notification signal to the mobile station based on transmission information transmitted by a packet data network gateway and relating to whether or not transmission of the notification signal is needed, when the serving gateway of the mobile station is changed from a first serving gateway to the second serving gateway by a position registration process, a handover process, or a radio switching process.

A second feature of the present invention is summarized as a mobile communication method in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires, the mobile communication method comprising the step of determining, by a second serving gateway, whether or not to transmit the notification signal to the mobile station based on transmission information transmitted by a packet data network gateway and relating to whether or not transmission of the notification signal is needed, when the serving gateway of the mobile station is changed from a first serving gateway to the second serving gateway by a position registration process, a handover process, or a radio switching process.

A third feature of the present invention is summarized as a packet data network gateway which is used in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires, the packet data network gateway comprising: a determination unit configured to determine whether or not to instruct a second serving gateway to transmit the notification signal, when the serving gateway of the mobile station is changed from a first serving gateway to the second serving gateway by a position registration process, a handover process, or a radio switching process; and a transmission unit configured to transmit transmission information relating to whether or not the transmission of the notification signal is needed to the second serving gateway based on a determination result made by the determination unit.

A fourth feature of the present invention is summarized as a serving gateway which is used in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires, the serving gateway comprising a determination unit configured to determine whether or not to transmit the notification signal to the mobile station based on transmission information transmitted by a packet data network gateway and relating to whether or not transmission of the notification signal is needed, when the serving gateway of the mobile station is changed from a first serving gateway to a second serving gateway by a position registration process, a handover process, or a radio switching process.

### BRIEF DESCRIPTION OF THE DRAWINGS

[Fig. 1] Fig. 1 is an overall configuration diagram of a mobile communication system according to a first embodiment of the present invention.
[Fig. 2] Fig. 2 is a functional block diagram of a P-GW according to the first embodiment of the present invention.
[Fig. 3] Fig. 3 is a diagram showing an example of a "Proxy Binding Acknowledge" format to be transmitted by the P-GW according to the first embodiment of the present invention.
[Fig. 4] Fig. 4 is a diagram showing an example of a "Proxy Binding Acknowledge" format to be transmitted by the P-GW according to the first embodiment of the present invention.
[Fig. 5] Fig. 5 is a flowchart showing an operation of the P-GW according to the first embodiment of the present invention.
[Fig. 6] Fig. 6 is a functional block diagram of an S-GW according to the first embodiment of the present invention.
[Fig. 7] Fig. 7 is a flowchart showing an operation of the S-GW according to the first embodiment of the present invention.
[Fig. 8] Fig. 8 is a sequence diagram showing an operation of a mobile communication system according to the first embodiment of the present invention.
[Fig. 9] Fig. 9 is a diagram for illustrating an operation of the mobile communication system according to a first modification of the present invention.
[Fig. 10] Fig. 10 is a diagram for illustrating an operation of a mobile communication system according a second modification of the present invention.
[Fig. 11] Fig. 11 is a diagram for illustrating an operation of a mobile communication system according a third modification of the present invention.
[Fig. 12] Fig. 12 is a diagram for illustrating an operation of a mobile communication system according a fourth modification of the present invention.
[Fig. 13] Fig. 13 is a diagram for illustrating an operation of a mobile communication system according a fifth modification of the present invention.
[Fig. 14] Fig. 14 is a diagram for illustrating an operation of a mobile communication system according a sixth modification of the present invention.
[Fig. 15] Fig. 15 is a diagram for illustrating an operation of a mobile communication system according a seventh modification of the present invention.
[Fig. 16] Fig. 16 is a diagram for illustrating an operation of a mobile communication system according an eighth modification of the present invention.
[Fig. 17] Fig. 17 is a sequence diagram showing an operation of a conventional mobile communication system.
[Fig. 18] Fig. 18 is a diagram for illustrating a problem of the conventional mobile communication system.

### MODES FOR CARRYING OUT THE INVENTION

### (Mobile Communication System according to First Embodiment of the Invention)

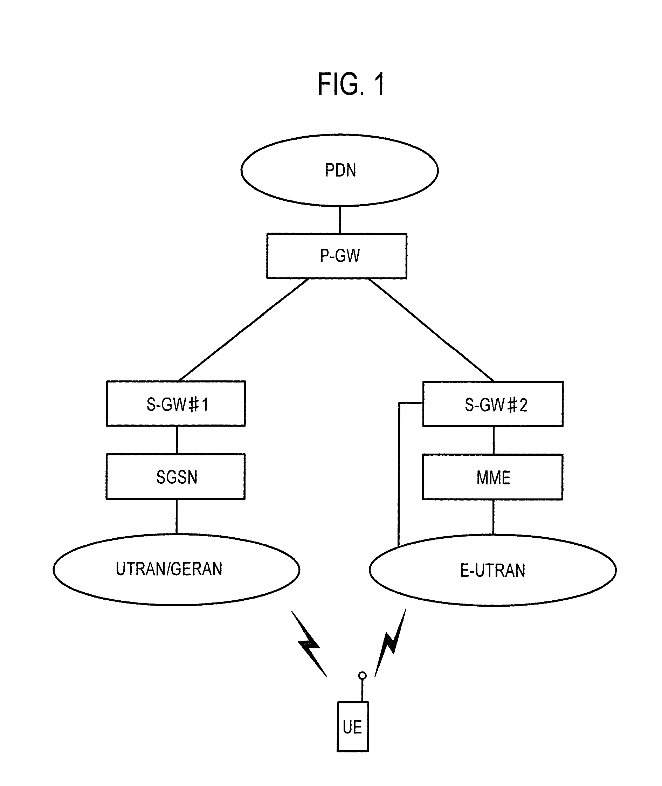

Referring to Figs. 1 to 8, a mobile communication system according to a first embodiment of the present invention is described.

As shown in Fig. 1, the mobile communication system according to the present embodiment is a mobile communication system including an EPC network to which PMIPv6 is applied.

Specifically, in the mobile communication system according to the present embodiment, an S-GW to which a UE is to be connected is configured to transmit "RA" including "default gateway information" to the UE when "MaxRtrAdvInterval" expires and the UE is configured to delete the held "default gateway information" if the UE does not receive the "RA" from the S-GW to which the UE is to be connected by the time "Router lifetime" expires.

For example, as shown in Fig. 1, the mobile communication system according to the present embodiment includes, UTRAN (Universal Terrestrial Radio Access Network)/GERAN (GSM EDGE Radio Access Network), an SGSN (Serving GPRS Support Node, a packet switch), E-UTRAN (Evolved Universal Terrestrial Radio Access Network), an MME (Mobility Management Entity, a mobility management node), an S-GW#1, an S-GW#2, and a P-GW (PDN Gateway, packet data network gateway) which is connected to a PDN (Packet Data Network).

Here, the S-GW#2 and the E-UTRAN are connected with each other. On the other hand, the S-GW#1 and the UTRAN/GERAN may or may not be connected with each other.

Note that the UE according to the present embodiment may be a terminal including a communication application such as a browser or may be a device which is connected with a PC or the like to relay communications between a PC and a network.

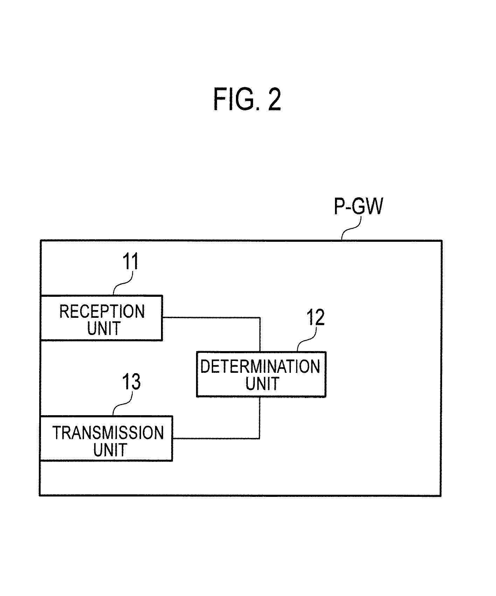

As shown in Fig. 2, the P-GW includes a reception unit 11, a determination unit 12, and a transmission unit 13.

The reception unit 11 is configured to receive a signal such as "Proxy Binding Update" or the like from the S-GW#1 and S-GW#2. Here, the "Proxy Binding Update" is a signal which is a request to change the setting of the PDN connection between the UE and the PDN.

The determination unit 12 is configured to determine whether or not to instruct the S-GW#2 to transmit the "RA" when the S-GW to which the UE is to be connected is changed from the S-GW#1 to the S-GW#2 by a TAU/RAU process, handover process, or radio switching process of UE.

For example, the determination unit 12 may be configured to perform the above determination for each APN (Access Point Name, a connection target packet data network) of the UE.

The transmission unit 13 is configured to transmit RA transmission information to the S-GW#2 based on the determination result made by the determination unit 12.

Here, the transmission unit 13 may be configured to transmit the RA transmission information by using the "Proxy Binding Acknowledgement".

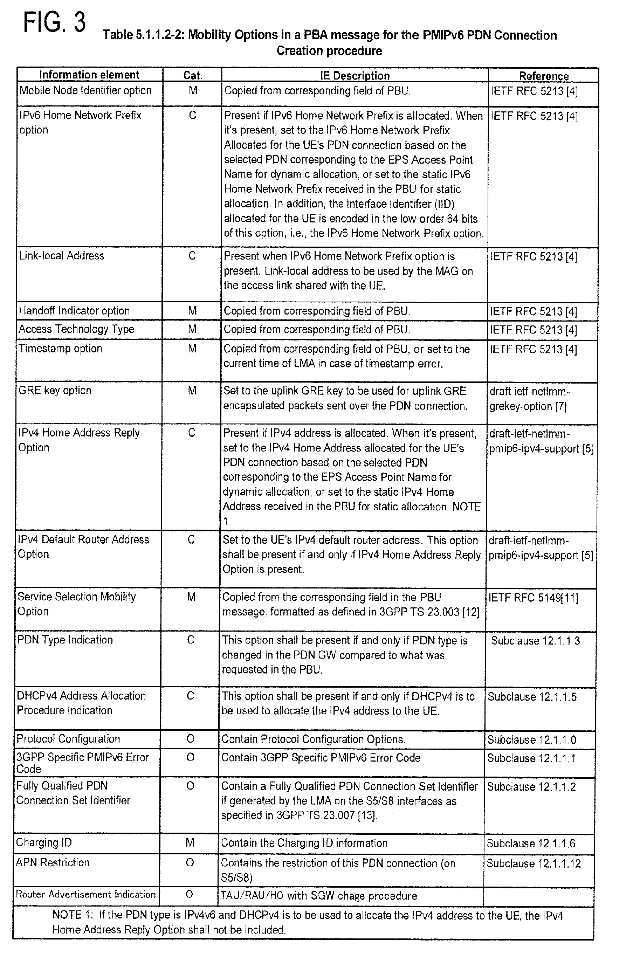

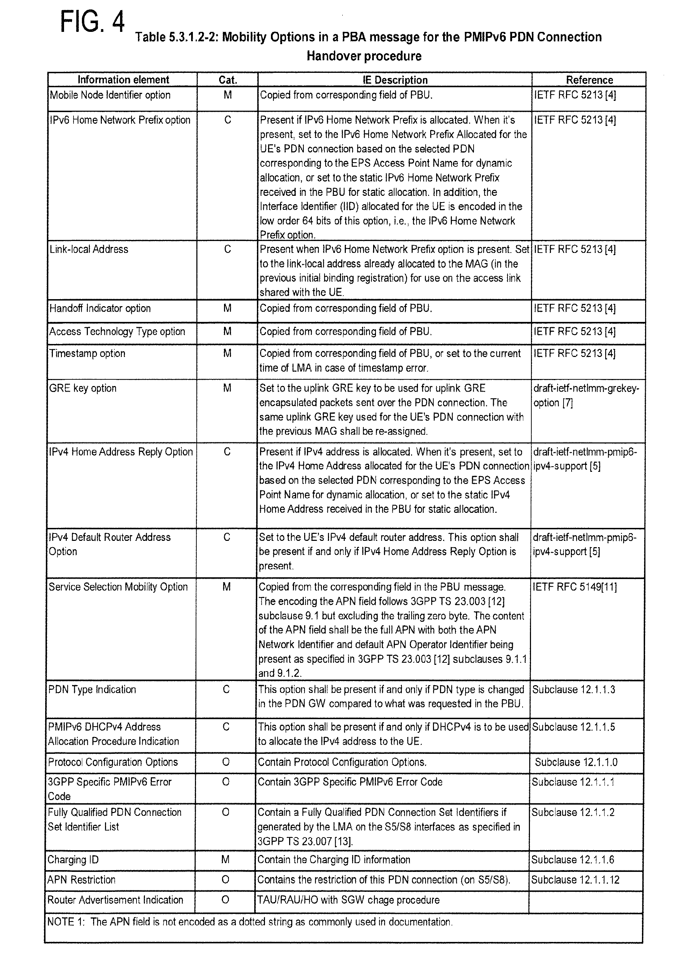

For example, as shown in Figs. 3 and 4, the transmission unit 13 may be configured to transmit the above-described RA transmission information by an information element "Router Advertisement Indication" which is specified in the "Mobility Option" of the "Proxy Binding Acknowledgement" specified in 3GPP TS27.175.

Moreover, the transmission unit 13 may be configured to set whether or not transmission of the "RA" is needed in the RA transmission information.

Here, the transmission unit 13 may be configured to set, as another parameter, an elapsed time after an Attach procedure of the UE in the RA transmission information while the determination unit 12 does not perform the above-described determination.

Also, the transmission unit 13 may be configured to transmit the RA transmission information to the S-GW#2 only when the determination unit 12 determines that the S-GW#2 needs to be instructed to transmit the "RA".

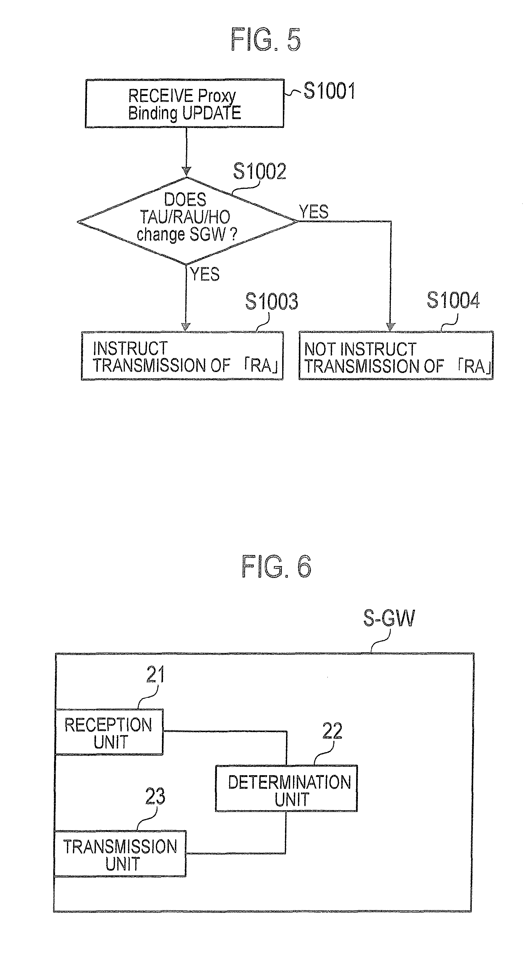

Here, referring to Fig. 5, an example of an operation of the P-GW is briefly described.

As shown in Fig. 5, at step S101, the P-GW receives "Proxy Binding Update" from the S-GW#2. Then, at step S102, the P-GW determines whether or not the S-GW to which the UE is to be connected has been changed from the S-GW#1 to the S-GW#2 by the TAU/RAU process, handover process, or radio switching process of the UE.

When the P-GW determines that the S-GW to which the UE is to be connected has been changed from the S-GW#1 to the S-GW#2, at step S103, the P-GW determines that the S-GW#2 needs to be instructed to transmit the "RA".

On the other hand, when the P-GW determines that the S-GW to which the UE is to be connected has not been changed from the S-GW#1 to the S-GW#2, at step S104, the P-GW determines that the S-GW#2 does not need to be instructed to transmit the "RA".

As shown in Fig. 6, the S-GW (i.e., the S-GW#1 or S-GW#2) includes a reception unit 21, a determination unit 22, and a transmission unit 23.

The reception unit 21 is configured to receive signals such as "Proxy Binding Acknowledgement" and the like from the P-GW.

The determination unit 22 is configured to determine whether or not to transmit a "RA" to the UE based on the RA transmission information transmitted by the P-GW, when the S-GW to which the UE is to be connected is changed from another S-GW to the own S-GW by the TAU/RAU process, the handover process, or the radio switching process.

For example, the determination unit 22 may be configured to determine whether or not to transmit the "RA" to the UE based on the RA transmission information (specifically, the information indicating whether or not the transmission of the "RA" is needed) which is set in the information element "Router Advertisement Indication" in the "Proxy Binding Acknowledgement" transmitted by the P-GW.

Also, the determination unit 22 may be configured to determine that the "RA" does not need to be transmitted to the UE when the RA transmission information has not been transmitted by the P-GW.

Also, the determination unit 22 may be configured to perform the above-described determination based on an elapsed time after an Attach procedure of the UE, which is set in the RA transmission information.

For example, the determination unit 22 may be configured to determine that the "RA" should be transmitted to the UE when the elapsed time after the Attach procedure, which is set in the RA transmission information, is equal to or longer than a predetermined time (e.g., "Router lifetime").

Alternatively, the determination unit 22 may be configured to perform the above-described determination based on the number of changing the S-GW to which the UE is to be connected, which is set in the RA transmission information.

For example, the determination unit 22 may be configured to determine that the "RA" should be transmitted to the UE when the number of changing the S-GW to which the UE is to be connected, which is set in the RA transmission information, is equal to or larger than a predetermined number (e.g., 3 times).

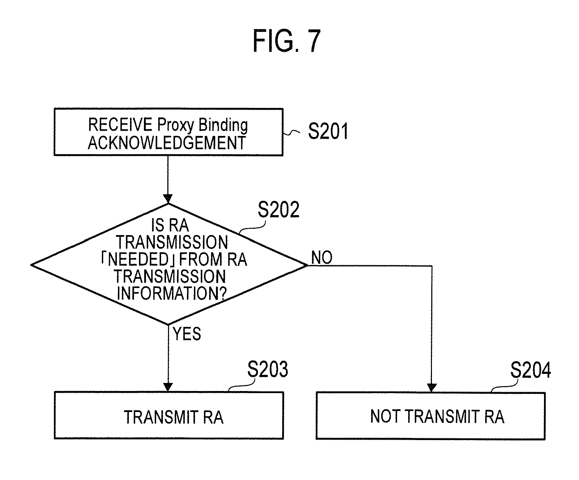

Here, referring to Fig. 7, an example of the operation of the S-GW is briefly described.

As shown in Fig. 7, at step S201, when the S-GW receives the "Proxy Binding Acknowledgement" from the P-GW, at step S202, the S-GW determines whether or not to transmit the "RA" to the UE based on the RA transmission information included in the "Proxy Binding Acknowledgement". When the S-GW determines that the "RA" should be transmitted to the UE, at step S203, the S-GW transmits the "RA" to the UE even when the "MaxRtrAdvInterval" has not expired.

When the S-GW determines that the "RA" does not need to be transmitted to the UE, at step S204, the S-GW does not transmit the "RA" to the UE.

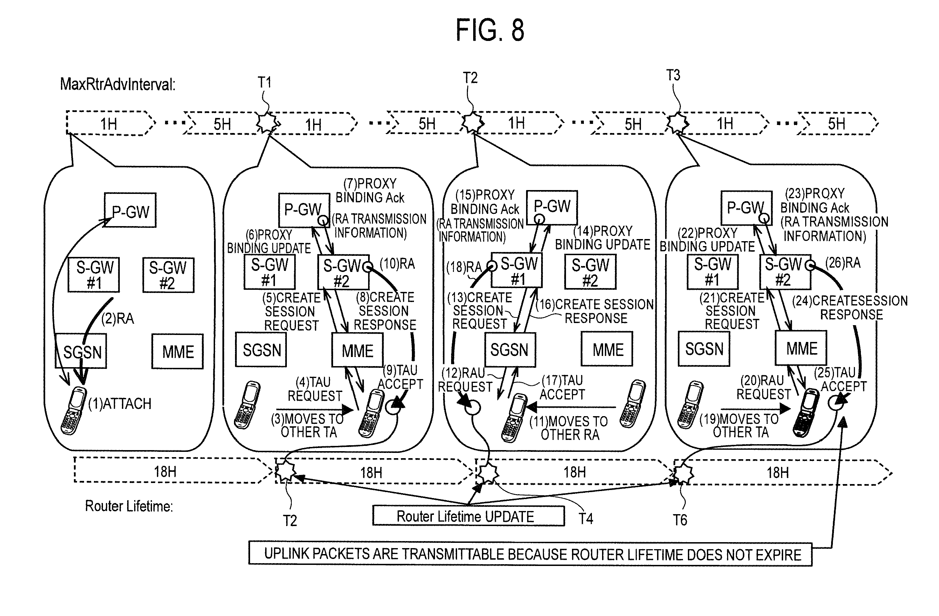

Hereinafter, referring to Fig. 8, an example of the operation of the mobile communication system according to the present embodiment is described.

As shown in Fig. 8, when the Attach procedure of the UE is performed in (1), the S-GW#1 transmits a "RA" to the UE in (2).

After that, the UE moves to a TA under the control of the S-GW#2 in (3), and transmits "TAU Request" to the MME in (4).

The MME transmits "Create Session Request" to the S-GW#2 in (5) and the S-GW#2 transmits the "Proxy Binding Update" to the P-GW in (6).

The P-GW transmits "Proxy Binding Acknowledgement" including the above-described RA transmission information to the S-GW#2 in (7).

The S-GW#2 transmits the "Create Session Response" to the MME in (8) and the MME transmits "TAU Accept" to the UE in (9).

Also, in (10), the S-GW#2 determines that the "RA" should be transmitted to the UE based on the above-described RA transmission information, and transmits the "RA" to the UE.

Note that in the case of the handover process or the radio switching process as well, operations similar to the operations of (1) to (10) are performed.

As a result, at timing T1, the "MaxRtrAdvInterval" which is held in the S-GW#2 is activated, and, at timing T2, the "Router lifetime" which is held in the UE is also reactivated.

After that, the UE moves to the RA under the control of the S-GW#1 in (11), and transmits "RAU Request" to the SGSN in (12).

The SGSN transmits the "Create Session Request" in the S-GW#1 in (13), and the S-GW#1 transmits the "Proxy Binding Update" to the P-GW in (14).

The P-GW transmits "Proxy Binding Acknowledgement" including the above-described RA transmission information to the S-GW#1 in (15).

The S-GW#1 transmits "Create Session Response" to the SGSN in (16), and the SGSN transmits "RAU Accept" to the UE in (17).

Also, in (18), the S-GW#1 determines that the "RA" should be transmitted to the UE based on the above-described RA transmission information and transmits the "RA" to the UE.

Note that in the case of the handover process or the radio switching process as well, operations similar to the operations of (12) to (18) are performed.

As a result, at timing T3, the "MaxRtrAdvInterval" which is held in the S-GW#1 is activated, and, at timing T4, the "Router lifetime" which is held in the UE is also reactivated.

After that, the UE moves to the TA under the control of the S-GW#2, and transmits the "TAU Request" to the MME in (20).

The MME transmits "Create Session Response" to the S-GW#2 in (21), and the S-GW#2 transmits the "Proxy Binding Update" to the P-GW in (22).

The P-GW transmits "Proxy Binding Acknowledgement" including the above-described RA transmission information to the S-GW#2 in (23).

The S-GW#2 transmits "Create Session Response" to the MME in (24) and the MME transmits "TAU Accept" to the UE in (25).

Also, the S-GW#2 determines that the "RA" should be transmitted to the UE based on the above-described RA transmission information and transmits the "RA" to the UE in (26).

Note that in the case of the handover process or the radio switching process as well, operations similar to the operations (20) to (26) are performed.

As a result, at timing T5, the "MaxRtrAdvInterval" which is held in the S-GW#1 is activated, and at timing T6, the "Router lifetime" which is held in the UE is also reactivated.

With the mobile communication system according to the first embodiment of the present invention, the S-GW can transmit the "RA" to the UE even when "MaxRtrAdvInterval" has not expired.

As a result, a phenomenon that the UE cannot transmit uplink packets can be avoided even in the case where the TAU/RAU process, handover process, or radio switching process of the UE frequently occurs and the S-GW to which the UE is to be connected is frequently changed, in the EPC network to which PMIPv6 is applied.

### (Modification 1)

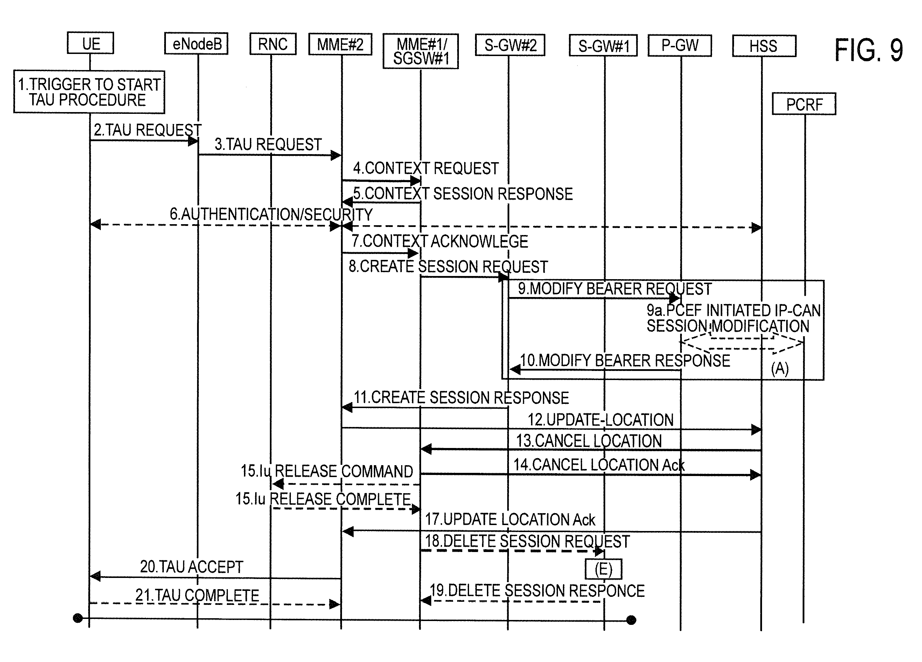

Referring to Fig. 9, a mobile communication system according to Modification 1 is described. Hereinafter, the mobile communication system according to Modification 1 is described with a focus on differences from the above-described mobile communication system according to the first embodiment.

Fig. 9 shows a TAU (Tracking Area Update) process which is accompanied by a change of an S-GW to which a UE is to be connected from an S-GW#1 to an S-GW#2, which is defined in Figure 5.3.3.1-1 of 3GPP TE 23.401.

Here, the S-GW#2 is configured to determine whether or not "S-GW change information (Operation Indication)" is set in the "Create Session Request" received at step 8.

The S-GW#2 is configured to continue the existing process when the S-GW#2 determines that the "S-GW change information" is not set.

On the other hand, the S-GW#2 is configured to activate "NW Initiated Service Request Procedure" after the TAU process, perform a Preservation recovery process, and notify the UE of a "RA" when the S-GW#2 determines that the "S-GW change information" is set.

Note that the S-GW#2 may be configured to be capable of notifying the UE of the "RA" after step 10. With that configuration, the complication in control in the network can be avoided by activating the "NW Initiated Service Request Procedure" before steps 11 to 21 are completed.

### (Modification 2)

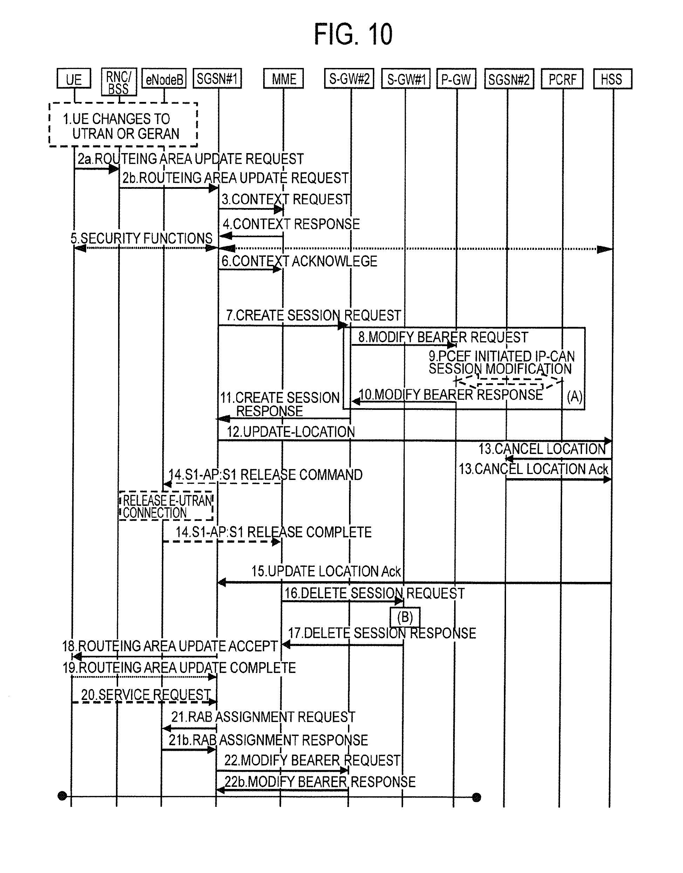

Referring to Fig. 10, a mobile communication system according to Modification 2 is described. Hereinafter, the mobile communication system according to Modification 2 is described with a focus on differences from the mobile communication system according to the first embodiment.

Fig. 10 shows a RAU (Routing Area Update) process which is accompanied by a change of an S-GW to which a UE is to be connected from an S-GW#1 to an S-GW#2, which is defined in Figure 5.3.3.6-1 of 3GPP TS23.401.

Here, the S-GW#2 is configured to determine whether or not "S-GW change information (Operation Indication)" is set in the "Create Session Request" received at step 7.

The S-GW#2 is configured to continue the existing process when the S-GW#2 determines that the "S-GW change information" is not set.

On the other hand, the S-GW#2 is configured to activate the "NW Initiated Service Request procedure" after the RAU process is completed, perform the Preservation recovery process, and notify the UE of the "RA" when the S-GW#2 determines that the "S-GW change information" is set.

### (Modification 3)

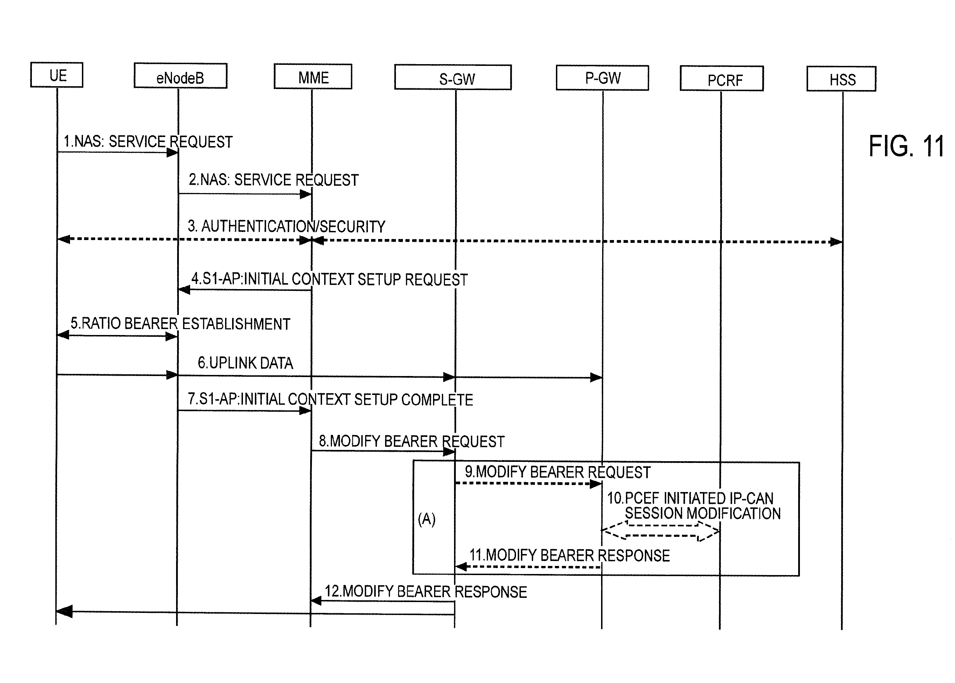

Referring to Fig. 11, a mobile communication system according to Modification 3 is described. Hereinafter, the mobile communication system according to Modification 3 is described with a focus on differences from the mobile communication system according to the first embodiment.

Fig. 11 shows "UE triggered Service Request Procedure", which is defined in Figure 5.3.4.1-1 of 3GPP TS23.401.

Here, the S-GW is configured to determine whether or not "downlink U-Plane address information (S1 eNodeB F-TEID or S4-U SGSN F-TEID)"is set in the "Modify Bearer Request" received at step 8.

The S-GW is configured to continue the existing process when the S-GW#2 determines that the "downlink U-plane address information" is not set.

On the other hand, the S-GW is configured to activate the "NW Initiated Service Request procedure" after a U-Plane is established, i.e., after step 12, and notify the UE of the "RA" when the S-GW#2 determines that the "downlink U-plane address information" is set.

### (Modification 4)

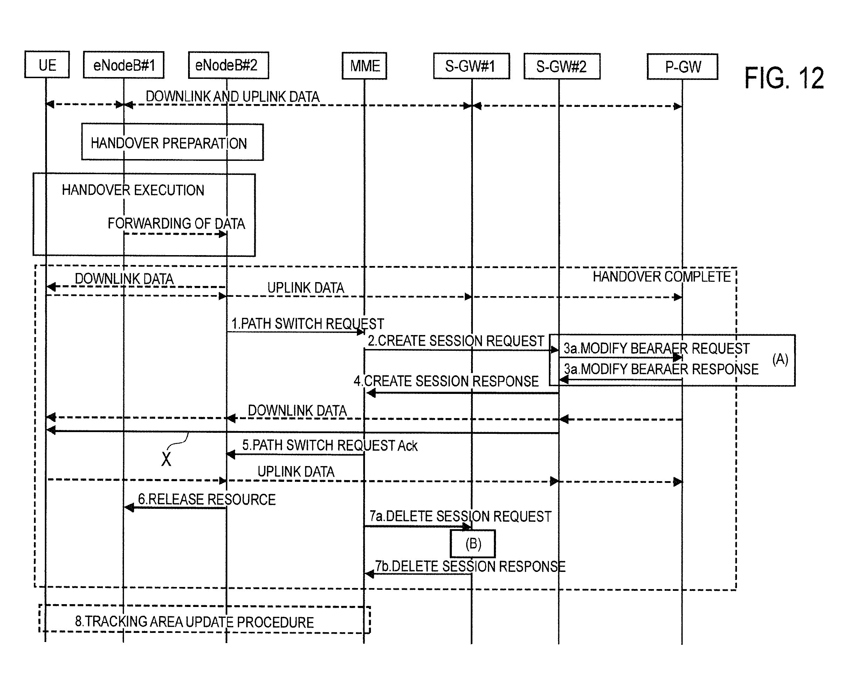

Referring to Fig. 12, a mobile communication system according to Modification 4 is described. Hereinafter, the mobile communication system according to Modification 4 is described with a focus on differences from the mobile communication system according to the first embodiment.

Fig. 12 shows a handover process which is accompanied by a change of an S-GW to which a UE is to be connected from an S-GW#1 to an S-GW#2, which is defined in Figure5.5.1.1.3-1 of 3GPP TS23.401.

Here, the S-GW#2 is configured to determine whether or not "downlink U-Plane address information (S1 eNodeB F-TEID)" is set in the "Create Session Request" received at step 8.

The S-GW#2 is configured to continue the existing process when the S-GW#2 determines that the "downlink U-plane address information" is not set.

On the other hand, the S-GW#2 is configured to notify the UE of the "RA" after a U-Plane is established, i.e., at step X, when the S-GW#2 determines that the "downlink U-plane address information" is set.

### (Modification 5)

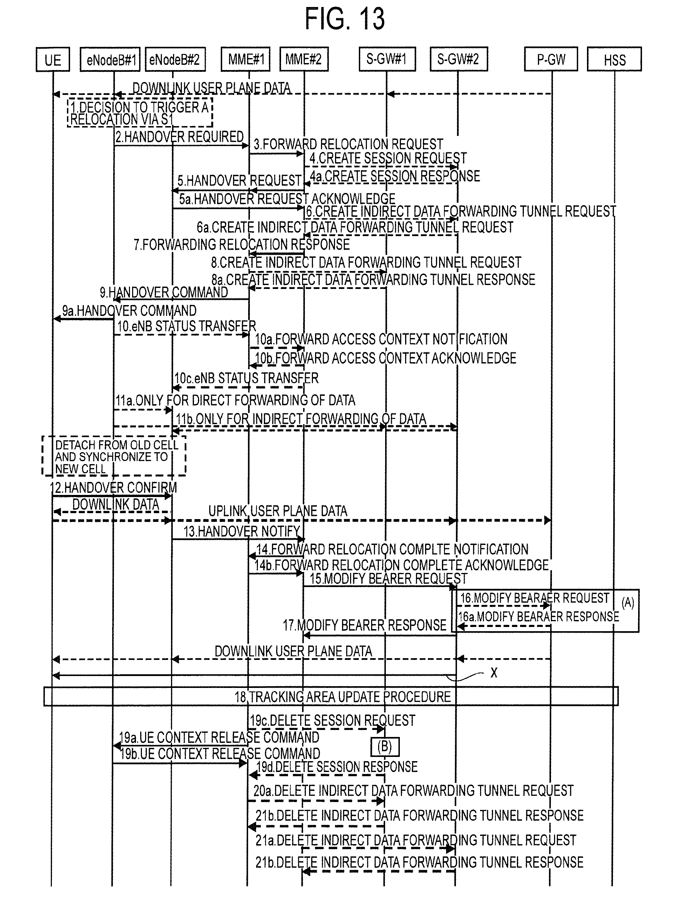

Referring to Fig. 13, a mobile communication system according to Modification 5 is described. Hereinafter, the mobile communication system according to Modification 5 is described with a focus on differences from the mobile communication system according to the first embodiment.

Fig. 13 shows an S1 handover process which is accompanied by a change of an S-GW to which a UE is to be connected from an S-GW#1 to an S-GW#2, which is defined in Figure 5.5.1.2.2-1 of 3GPP TS23.401.

Here, the S-GW#2 is configured to determine whether or not "downlink U-Plane address information (S1 eNodeB F-TEID)"is set in the "Modify Bearer Request" received at step 15.

The S-GW#2 is configured to continue the existing process when the S-GW#2 determines that the "downlink U-plane address information" is not set.

On the other hand, the S-GW#2 is configured to notify the UE of the "RA" after a U-Plane is established, i.e., at step X when the S-GW#2 determines that the "downlink U-plane address information" is set.

### (Modification 6)

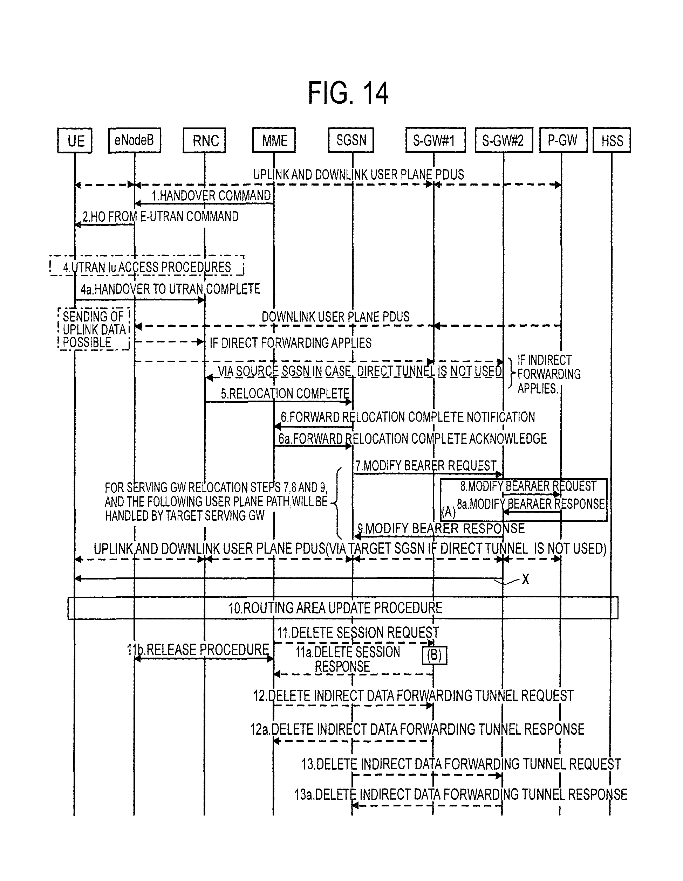

Referring to Fig. 14, a mobile communication system according to Modification 6 is described. Hereinafter, the mobile communication system according to Modification 6 is described with a focus on differences from the mobile communication system according to the first embodiment.

Fig. 14 shows an Inter-RAT handover process (from E-UTRAN to UTRAN) which is accompanied by a change of an S-GW to which a UE is to be connected from an S-GW#1 to an S-GW#2, which is defined in Figure 5.5.2.1.3-1 of 3GPP TS23.401.

Here, the S-GW#2 is configured to determine whether or not "downlink U-Plane address information (S4-U SGSN F-TEID)"is set in the "Modify Bearer Request" received at step 7.

The S-GW#2 is configured to continue the existing process when the S-GW#2 determines that the "downlink U-plane address information" is not set.

On the other hand, the S-GW#2 is configured to notify the UE of the "RA" after a U-Plane is established, i.e., at step X when the S-GW#2 determines that the "downlink U-plane address information" is set.

### (Modification 7)

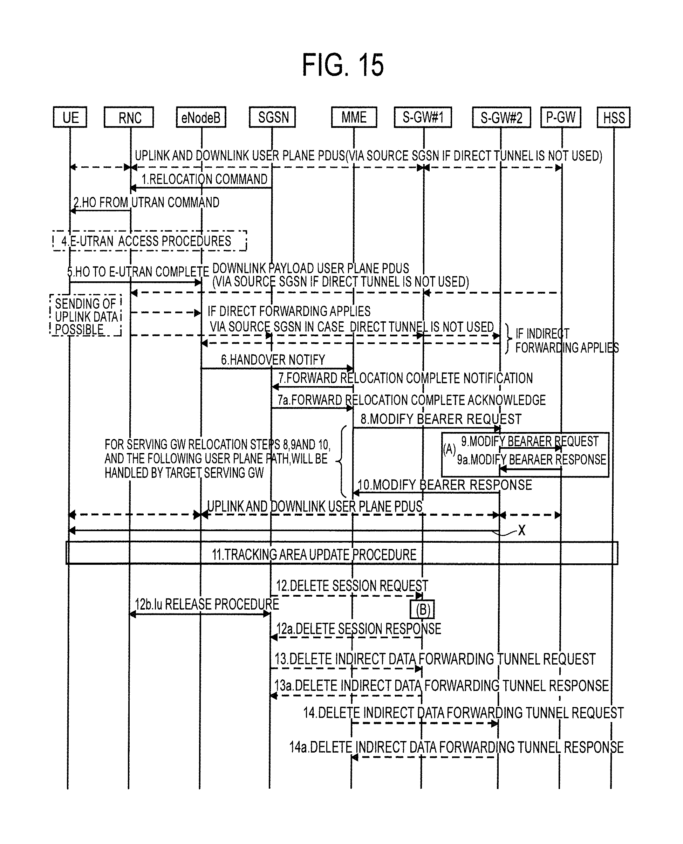

Referring to Fig. 15, a mobile communication system according to Modification 7 is described. Hereinafter, the mobile communication system according to Modification 7 is described with a focus on differences from the mobile communication system according to the first embodiment.

Fig. 15 shows an Inter-RAT handover process (from UTRAN to E-UTRAN) which is accompanied by a change of an S-GW to which a UE is to be connected from an S-GW#1 to an S-GW#2, which is defined in Figure 5.5.2.2.3-1 of 3GPP TS23.401.

Here, the S-GW#2 is configured to determine whether or not "downlink U-Plane address information (S4-U SGSN F-TEID)"is set in the "Modify Bearer Request" received at step 7.

The S-GW#2 is configured to continue the existing process when the S-GW#2 determines that the "downlink U-plane address information" is not set.

On the other hand, the S-GW#2 is configured to notify the UE of the "RA" after a U-Plane is established, i.e., at step X when the S-GW#2 determines that the "downlink U-plane address information" is set.

### (Modification 8)

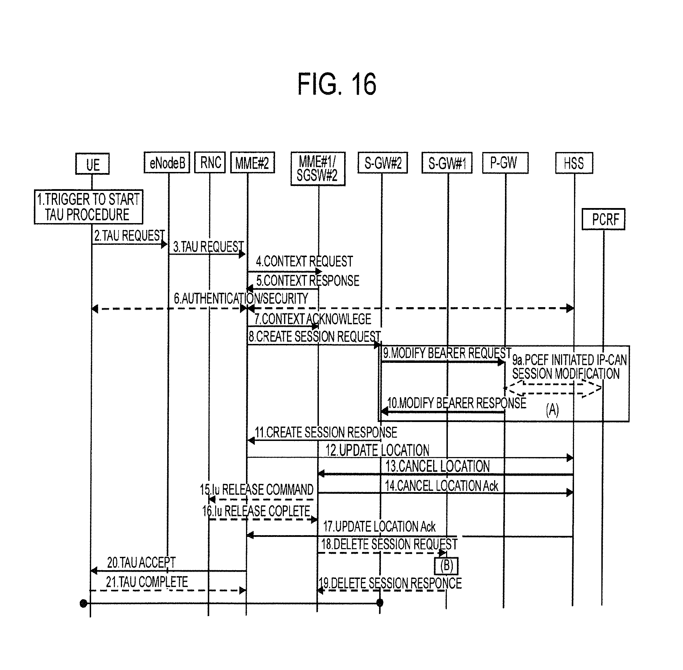

Referring to Fig. 16, a mobile communication system according to Modification 8 is described. Hereinafter, the mobile communication system according to Modification 10 is described with a focus on differences from the mobile communication system according to the first embodiment.

Fig. 16 shows a TAU process which is accompanied by a change of an S-GW to which a UE is to be connected from an S-GW#1 to an S-GW#2, which is defined in Figure 5.3.3.1-1 of 3GPP TS23.401.

As shown in Fig. 16, an MME#2 is configured to receive an elapsed time after each PDN connection is established from an MME#1 via the "Context Response" at step 5.

The MME#2 is configured to notify the S-GW#2 of the elapsed time after each PDN connection is established via the "Create Session Request" at step 8.

The S-GW#2 is configured to determine whether or not to transmit "RA" after step 10 based on the received elapsed time. Here, the S-GW#2 may be configured to perform the determination in consideration of the S-GW change information.

Also, the S-GW#2 may be configured to detect a transmission time of the previous "RA" based on the elapsed time and properly set "MaxRtrAdvInterval".

The above-described features of the present embodiment may be expressed as follows.

A first feature of the present embodiment is summarized as a mobile communication system in which an S-GW (Serving Gateway) to which a UE (a mobile station) is to be connected is configured to transmit a "RA (notification signal)" including "default gateway information (information relating to a default gateway)" to the UE when "MaxRtrAdvInterval (a network-side timer)" has expired and the UE is configured to delete the held "default gateway information" if the UE does not receive the "RA" by the time "Router lifetime (a mobile station-side timer)" expires, the mobile communication system being configured such that a S-GW#2 (a second serving gateway) determines whether or not to transmit the RA to the UE based on RA transmission information (transmission information relating to whether or not the transmission of RA is needed) transmitted by a P-GW (a packet data network gateway), when the S-GE to which a UE is to be connected is changed from an S-GW#1 (a first serving gateway) to the S-GW#2 by a TAU/RAU process (a position registration process) or a handover process or a radio switching process.

A second feature of the present embodiment is summarized as a mobile communication method in a mobile communication system in which an S-GW to which a UE is to be connected is configured to transmit a "RA" including "default gateway information" to a UE when "MaxRtrAdvInterval" has expired and the UE is configured to delete the held "default gateway information" if the UE does not receive the "RA" by the time "Router lifetime" expires, in which an S-GW#2 determines whether or not to transmit the RA to the UE based on the RA transmission information transmitted by a P-GW when the S-GW to which a UE is to be connected is changed from an S-GW#1 to the S-GW#2 by a TAU/RAU process or a handover process or a radio switching process.

A third feature of the present embodiment is summarized as a P-GW which is used in a mobile communication system in which an S-GW to which a UE is to be connected is configured to transmit a "RA" including "default gateway information" to UE when "MaxRtrAdvInterval" has expired, and the UE is configured to delete the held "default gateway information" if the UE does not receive the "RA" by the time "Router lifetime" expires, the P-GW including: a determination unit 12 configured to determine whether or not to instruct a the transmission of "RA" to an S-GW#2 is instructed, when an S-GW to which the UE is to be connected is changed from an S-GW#1 to the S-GW#2 by a TAU/RAU process or a handover process or a radio switching process, and a transmission unit 13 configured to transmit RA transmission information to the S-GW#2 based on a determination result made by the determination unit 12.

In the third feature of the present invention, the transmission unit 13 may be configured to perform the above-described determination for each APN (connection destination packet data network) of the UE.

In the third feature of the present embodiment, the transmission unit 13 may be configured to transmit the RA transmission information to the S-GW#2 only when the determination unit 12 determines to instruct the S-GW#2 to transmit the "RA".

In the third feature of the present embodiment, the transmission unit 13 may be configured to set an elapsed time after an Attach procedure of the UE in the RA information when the determination unit 12 does not perform the above-described determination.

In the third feature of the present embodiment, the transmission unit 13 may be configured to set an elapsed time after an Attach procedure of the UE in the RA transmission information when the determination unit 12 does not perform the above-described determination.

A fourth feature of the present embodiment is summarized as an S-GW which is used in a mobile communication system in which an S-GW to which a UE is to be connected is configured to transmit a "RA" including "default gateway information" to the UE when "MaxRtrAdvInterval" has expired and the UE is configured to delete the held "default gateway information" if the UE does not receive the "RA" by the time "Router lifetime" expires, the S-GW including a determination unit 22 configured to determine whether or not to transmit the "RA" to the UE based on RA transmission information transmitted by a P-GW, when an S-GW to which the UE is to be connected is changed from an S-GW#1 to an S-GW#2 by a TAU/RAU process or a handover process or a radio switching process,.

In the fourth feature of the present embodiment, the determination unit 22 may be configured to determine that transmission of the "RA" to the UE is not needed when the RA transmission information is not transmitted by the P-GW.

In the fourth feature of the present embodiment, the determination unit 22 may be configured to perform the above-described determination based on an elapsed time after an Attach procedure of the UE, which is set in the RA transmission information.

In the fourth feature of the present embodiment, the determination unit 22 may be configured to perform the above-described determination based on the number of changing the S-GW to which the UE is to be connected, which is set in the RA transmission information.

Note that the above-described operations of the UE, the P-GW, the S-GW, the MME, the SGSN, and the like may be implemented by hardware, may be implemented by a software module executed by a processor, or may be implemented by a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASIC may be provided in the UE, the P-GW, the S-GW, the MME, the SGSN, or the like. Also, the storage medium and the processor may be provided in the UE, the P-GW, the S-GW, the MME, the SGSN, or the like as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

Note that the entire content of Japanese Patent Application No. 2011-025500 (filed on February 8, 2011) is incorporated herein by reference.

### INDUSTRIAL APPLICABILITY

As described above, the present invention can provide a mobile communication system, a mobile communication method, a packet data network gateway, and a serving gateway which are capable of avoiding a phenomenon that a UE cannot transmit uplink packets even when a TAU/RAU process, handover process, or radio switching process of the UE frequently occurs and an S-GW to which the UE is to be connected is frequently changed in an EPC network to which PMIPv6 is applied.

### EXPLANATION OF THE REFERENCE NUMERALS

- P-GW: packet data network gateway
- S-GW: serving gateway
- 11, 21: reception unit
- 12, 22: determination unit
- 13, 23: transmission unit

## Claims

1. A mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires,
the mobile communication system being configured such that a second serving gateway determines whether or not to transmit the notification signal to the mobile station based on transmission information transmitted by a packet data network gateway and relating to whether or not transmission of the notification signal is needed, when the serving gateway of the mobile station is changed from a first serving gateway to the second serving gateway by a position registration process, a handover process, or a radio switching process.

2. A mobile communication method in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires,
the mobile communication method comprising the step of determining, by a second serving gateway, whether or not to transmit the notification signal to the mobile station based on transmission information transmitted by a packet data network gateway and relating to whether or not transmission of the notification signal is needed, when the serving gateway of the mobile station is changed from a first serving gateway to the second serving gateway by a position registration process, a handover process, or a radio switching process.

3. A packet data network gateway which is used in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires, the packet data network gateway comprising:
a determination unit configured to determine whether or not to instruct a second serving gateway to transmit the notification signal, when the serving gateway of the mobile station is changed from a first serving gateway to the second serving gateway by a position registration process, a handover process, or a radio switching process; and
a transmission unit configured to transmit transmission information relating to whether or not the transmission of the notification signal is needed to the second serving gateway based on a determination result made by the determination unit.

4. The packet data network gateway according to claim 3, wherein the determination unit is configured to perform the determination for each connection destination packet data network of the mobile station.

5. The packet data network gateway according to claim 3, wherein the transmission unit is configured to transmit the transmission information to the second serving gateway only when the determination unit determines to instruct the second serving gateway to transmit the notification signal.

6. The packet data network gateway according to claim 3, wherein the transmission unit is configured to set an elapsed time after an Attach procedure of the mobile station in the transmission information when the determination unit does not perform the determination.

7. The packet data network gateway according to claim 3, wherein the transmission unit is configured to set the number of changing the serving gateway of the mobile station in the transmission information when the determination unit does not perform the determination.

8. A serving gateway which is used in a mobile communication system in which a serving gateway of a mobile station is configured to transmit a notification signal including information relating to a default gateway to the mobile station when a network-side timer has expired and the mobile station is configured to delete the held information relating to the default gateway if the mobile station does not receive the notification signal by the time a mobile station-side timer expires,
the serving gateway comprising a determination unit configured to determine whether or not to transmit the notification signal to the mobile station based on transmission information transmitted by a packet data network gateway and relating to whether or not transmission of the notification signal is needed, when the serving gateway of the mobile station is changed from a first serving gateway to a second serving gateway by a position registration process, a handover process, or a radio switching process.

9. The serving gateway according to claim 8, wherein the determination unit is configured to determine that transmission of the notification signal to the mobile station is not needed when the transmission information is not transmitted by the packet data network gateway.

10. The serving gateway according to claim 8, wherein the determination unit is configured to perform the determination based on an elapsed time after an Attach procedure of the mobile station, which is set in the transmission information.

11. The serving gateway according to claim 8, wherein the determination unit is configured to perform the determination based on the number of changing the serving gateway of the mobile station, which is set in the transmission information.
